# EUROPÄISCHE PATENTSCHRIFT

(11) **EP 3 141 783 B1**
(45) Veröffentlichungstag und Bekanntmachung des Hinweises auf die Patenterteilung: **27.02.2019**
(21) Anmeldenummer: 15185030.2
(22) Anmeldetag: 14.09.2015
(51) Int. Cl.: F16K 11/085, F16K 31/12, F24D 3/08, F24D 19/10

(54) **VENTILVORRICHTUNG**
VALVE DEVICE
DISPOSITIF DE SOUPAPE

(43) Veröffentlichungstag der Anmeldung: 15.03.2017
(73) Patentinhaber: Bosch Termoteknik Isitma ve Kilma San. Tic. A.S., 45030 Manisa (TR)
(72) Erfinder: Pekgüzelsu, Mustafa, Izmir (TR); Erdogan, Hasan Cosan, 1203 Bornova/Izmir (TR)
(74) Vertreter: Bee, Joachim

(56) Entgegenhaltungen:
- DE-A1- 3 402 925
- DE-C1- 4 125 366
- DE-U1- 20 317 339
- GB-A- 1 270 101
- GB-A- 2 170 883
- US-A- 2 842 150
- US-A- 3 043 324
- US-A- 3 596 671

## Beschreibung

### Stand der Technik

Die Erfindung betrifft eine Regelventilvorrichtung nach dem Oberbegriff des Patentanspruchs 1.

Es ist bereits eine Ventilvorrichtung mit einem Ventilelement bekannt, welches dazu vorgesehen ist, einen Fluidstrom zu beeinflussen. Die Ventilvorrichtung umfasst eine mit dem Ventilelement wirkschlüssig verbundene mechanische Aktoreinheit, welches dazu vorgesehen ist, eine Stellung des Ventilelements zu verändern.

Die US 3043324 A offenbart eine Ventilvorrichtung mit einem Ventilelement, welches dazu vorgesehen ist, einen ersten Fluidstrom zu beeinflussen, und mit einer mit dem Ventilelement wirkschlüssig verbundenen mechanischen Aktoreinheit, welche dazu vorgesehen ist, eine Stellung des Ventilelements zu verändern, wobei die Aktoreinheit in zumindest einem Betriebszustand zumindest teilweise in einem Strömungsbereich eines zweiten Fluidstroms angeordnet und dazu vorgesehen ist, die Stellung des Ventilelements in Abhängigkeit vom zweiten Fluidstrom zu verändern.

### Offenbarung der Erfindung

Die Erfindung geht aus von einer Ventilvorrichtung, insbesondere einer Dreiwegeventilvorrichtung, mit zumindest einem Ventilelement, welches dazu vorgesehen ist, zumindest einen ersten Fluidstrom zu beeinflussen, und mit zumindest einer mit dem Ventilelement wirkschlüssig verbundenen mechanischen Aktoreinheit, welche dazu vorgesehen ist, eine Stellung des Ventilelements zu verändern.

Die Aktoreinheit ist in zumindest einem Betriebszustand zumindest teilweise in einem Strömungsbereich eines zweiten Fluidstroms angeordnet und dazu vorgesehen, die Stellung des Ventilelements in Abhängigkeit vom zweiten Fluidstrom zu verändern.

Es wird vorgeschlagen, dass die Ventilvorrichtung zumindest ein Untersetzungsgetriebe aufweist, welches wirkschlüssig zwischen der Aktoreinheit und dem Ventilelement angeordnet ist. Hierdurch kann eine Drehbewegung der Aktoreinheit in eine Drehbewegung des Ventilelements gewandelt werden, welche gegenüber der Drehbewegung der Aktoreinheit eine reduzierte Drehgeschwindigkeit aufweist.

Unter einer "Ventilvorrichtung" soll in diesem Zusammenhang insbesondere eine Vorrichtung verstanden werden, welche dazu vorgesehen ist, in zumindest einem Betriebszustand insbesondere einen Volumenstrom und/oder einen Druck eines in die Ventilvorrichtung einströmenden und/oder die Ventilvorrichtung durchströmenden insbesondere flüssigen Fluids einzustellen und/oder zu regeln und/oder zu lenken. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Ventilelement" soll in diesem Zusammenhang insbesondere ein Element verstanden werden, dessen Position und/oder Ausrichtung und/oder Formgebung insbesondere in Abhängigkeit zumindest einer Regelgröße insbesondere aktiv veränderbar ist. Insbesondere ist durch eine Veränderung der Position und/oder der Ausrichtung und/oder der Formgebung des zumindest einen Ventilelements zumindest ein Strömungspfad, entlang dessen die Ventilvorrichtung von zumindest einem ersten Fluidstrom durchströmbar ist, erweiterbar und/oder verengbar und/oder umlenkbar.

Unter einer "mechanischen Aktoreinheit", soll in diesem Zusammenhang insbesondere eine Einheit verstanden werden, welche dazu vorgesehen ist, zumindest eine der Aktoreinheit zugeführte mechanische Energie in eine rotatorische und/oder translatorische Bewegung zu wandeln. Insbesondere ist die Aktoreinheit frei von Energiewandlern, welche zu einer Umwandlung von elektrischer Energie in kinetische Energie vorgesehen sind. Darunter, dass die Aktoreinheit mit dem Ventilelement "wirkschlüssig verbunden" ist, soll insbesondere verstanden werden, dass eine von der Aktoreinheit erzeugte rotatorische und/oder translatorische Bewegung mittelbar oder unmittelbar auf das zumindest eine Ventilelement übertragen wird, um dieses zu verschwenken und/oder zu verfahren und/oder zu verformen. Vorzugsweise ist die Aktoreinheit in zumindest einem Betriebszustand, insbesondere in einem montierten Zustand, in einem Strömungsbereich eines zweiten Fluidstroms angeordnet. Insbesondere ist die Aktoreinheit derart angeordnet, dass zumindest ein Element der Aktoreinheit, von dem zweiten Fluidstrom anströmbar ist. Darunter, dass die Aktoreinheit dazu vorgesehen ist, "die Stellung des Ventilelements in Abhängigkeit vom zweiten Fluidstrom zu verändern", soll insbesondere verstanden werden, dass die Aktoreinheit dazu vorgesehen ist, die Stellung des Ventilelements in Abhängigkeit, von einem Volumenstrom und/oder einer Strömungsgeschwindigkeit des zweiten Volumenstroms zu verändern.

Durch eine derartige Ausgestaltung kann eine gattungsgemäße Ventilvorrichtung mit verbesserten Betriebseigenschaften bereitgestellt werden. Insbesondere kann durch die Verwendung der mechanischen Aktoreinheit vorteilhaft auf eine elektromechanische und/oder elektromagnetische Aktoreinheit verzichtet werden, wodurch Kosten und/oder eine Baugröße der Ventilvorrichtung vorteilhaft reduziert werden können. Ferner entfällt vorteilhaft die Notwendigkeit einer elektrischen Verkabelung der Ventilvorrichtung.

In einer bevorzugten Ausgestaltung der Erfindung wird vorgeschlagen, dass das Ventilelement dazu vorgesehen ist, den ersten Fluidstrom umzulenken. Insbesondere ist das Ventilelement dazu vorgesehen, eine Fließrichtung des ersten Fluidstroms in Abhängigkeit von einem Volumenstrom und/oder einer Fließgeschwindigkeit des zweiten Fluidstroms zu verändern. Das Ventilelement ist insbesondere dazu vorgesehen, den ersten Fluidstrom bei einem ersten Volumenstrom des zweiten Fluidstroms in eine erste Fließrichtung und bei zumindest einem zweiten Volumenstrom des zweiten Fluidstroms in zumindest eine zweite Fließrichtung zu lenken. Hierdurch kann auf vorteilhaft einfache Weise eine Mehrwegeventilvorrichtung realisiert werden.

Ferner wird vorgeschlagen, dass das Ventilelement zumindest im Wesentlichen rohrförmig ausgebildet ist. Insbesondere ist das Ventilelement zumindest im Wesentlichen hohlzylindrisch ausgebildet. Das Ventilelement weist insbesondere eine zumindest im Wesentlichen kreisförmige Grundfläche auf. Insbesondere ist das Ventilelement einseitig geschlossen ausgebildet. Hierdurch kann das Ventilelement vorteilhaft einfach in einer rohrförmigen Fluidleitung angeordnet werden.

Des Weiteren wird vorgeschlagen, dass das Ventilelement zumindest eine Fluideinlassöffnung und zumindest eine Fluidauslassöffnung aufweist, welche zumindest im Wesentlichen senkrecht zueinander angeordnet sind. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist die Fluidauslassöffnung in einer Seitenwandung des zumindest im Wesentlichen rohrförmigen Ventilelements angeordnet. Hierdurch kann vorteilhaft einfache eine Umlenkung des ersten Fluidstroms erfolgen.

Zudem wird vorgeschlagen, dass die Aktoreinheit und das Ventilelement um eine gemeinsame Drehachse drehbar angeordnet sind. Insbesondere bewirkt eine Drehbewegung der Aktoreinheit um die Drehachse eine richtungsgleiche Drehbewegung des Ventilelements um die Drehachse. Hierdurch kann vorteilhaft einfache eine Umlenkung des ersten Fluidstroms erfolgen

Ferner wird vorgeschlagen, dass die Aktoreinheit zumindest einen Flügel aufweist, welcher dazu vorgesehen ist, einen Strömungswiderstand für den zweiten Fluidstrom bereitzustellen. Insbesondere ist der Flügel zumindest im Wesentlichen senkrecht zu einer Strömungsrichtung des zweiten Fluidstroms und/oder parallel zu einer Drehachse der Aktoreinheit angeordnet. Insbesondere kann die Aktoreinheit genau einen Flügel oder eine Mehrzahl von sternförmig um die Drehachse der Aktoreinheit angeordneten Flügeln aufweisen. Hierdurch kann eine Strömung des zweiten Fluidstroms vorteilhaft in eine Drehbewegung der Aktoreinheit umgesetzt werden.

Des Weiteren wird vorgeschlagen, dass die Ventilvorrichtung ein Rohrsystem umfasst, welches zur Aufnahme der Fluidströme vorgesehen ist und welches zumindest für sich allein genommen genau einen intern zusammenhängenden Fluidraum bereitstellt. Insbesondere umfasst das Rohrsystem zumindest vier zusammenhängende Rohrleitungen und/oder Rohrleitungsabschnitte. Insbesondere weist das Rohrsystem zumindest fünf Fluideinlassöffnungen und/oder Fluidauslassöffnungen auf. Insbesondere weist das Rohrsystem eine Fluideinlassöffnung für den ersten Fluidstrom und zumindest zwei Fluidauslassöffnungen für den ersten Fluidstrom auf. Das Rohrsystem weist insbesondere eine Fluideinlassöffnung für den zweiten Fluidstrom und eine Fluidauslassöffnungen für den zweiten Fluidstrom auf. Insbesondere ist das Ventilelement strömungstechnisch zwischen der Fluideinlassöffnung für den ersten Fluidstrom und den Fluidauslassöffnungen für den ersten Fluidstrom angeordnet. Insbesondere ist das Ventilelement dazu vorgesehen, den ersten Fluidstrom in Abhängigkeit von einer Stellung des Ventilelements in jeweils eine der Fluidauslassöffnungen für den ersten Fluidstrom zu lenken. Insbesondere ist die Aktoreinheit strömungstechnisch zwischen der Fluideinlassöffnung für den zweiten Fluidstrom und der Fluidauslassöffnungen für den zweiten Fluidstrom angeordnet. Insbesondere bilden die Rohrleitungen des Rohrsystems bei einem unmontierten Zustand der Ventilvorrichtung einen zusammenhängenden Fluidraum aus. Hierdurch kann eine vorteilhaft einfache Einbindung der Ventilvorrichtung in ein bestehendes Fluidleitungssystem erfolgen.

Zudem wird vorgeschlagen, dass die Ventilvorrichtung eine Dichtungseinheit aufweist, welche dazu vorgesehen ist, die Fluidströme in zumindest einem Betriebszustand, insbesondere in einem montierten Zustand der Ventilvorrichtung, zumindest im Wesentlichen voneinander zu trennen. Insbesondere umfasst die Dichtungseinheit eine Mehrzahl von insbesondere ringförmigen Dichtungselementen, welche das Ventilelement und/oder die Aktoreinheit in Umfangsrichtung vollständig umschließen. Hierdurch können der erste Fluidstrom und der zweite Fluidstrom vorteilhaft zuverlässig voneinander getrennt werden.

Ferner wird vorgeschlagen, dass die Ventilvorrichtung zumindest ein Rückstellelement aufweist, welches dazu vorgesehen ist, zumindest eine Rückstellkraft auf das Ventilelement und/oder die Aktoreinheit auszuüben. Insbesondere kann das Rückstellelement als Torsionsfeder und/oder als Spiralfeder ausgebildet sein. Hierdurch kann das Ventilelement vorteilhaft zuverlässig in eine Ausgangsposition zurück geführt werden.

Zudem wird ein Heizungssystem mit zumindest einer Ventilvorrichtung vorgeschlagen. Insbesondere ist die Ventilvorrichtung dazu vorgesehen, einen ersten Fluidstrom innerhalb des Heizungssystems in Abhängigkeit von einem zweiten Fluidstrom zumindest einem Wärmetauscher oder zumindest einem Heizkörper zuzuleiten. Insbesondere ist der erste Fluidstrom von einem Fluidstrom innerhalb eines Heizkreises des Heizungssystems ausgebildet. Insbesondere ist der zweite Fluidstrom von einem zu erwärmenden Trinkwasserstrom und/oder Brauchwasserstrom gebildet.

Die erfindungsgemäße Ventilvorrichtung soll hierbei nicht auf die oben beschriebene Anwendung und Ausführungsform beschränkt sein. Insbesondere kann die erfindungsgemäße Ventilvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung eines Heizsystems mit einem Heizkörper, einem Wärmetauscher und einer Ventilvorrichtung,
- Fig. 2: eine perspektivische Außenansicht der Ventilvorrichtung,
- Fig. 3: eine Schnittdarstellung der Ventilvorrichtung,
- Fig. 4: eine perspektivische Darstellung eines Ventilelements und einer wirkschlüssig mit dem Ventilelement verbundenen Aktoreinheit der Ventilvorrichtung,
- Fig. 5: eine Schnittdarstellung einer alternativen Ventilvorrichtung und
- Fig. 6: eine weitere Schnittdarstellung der alternativen Ventilvorrichtung.

### Beschreibung der Ausführungsbeispiele

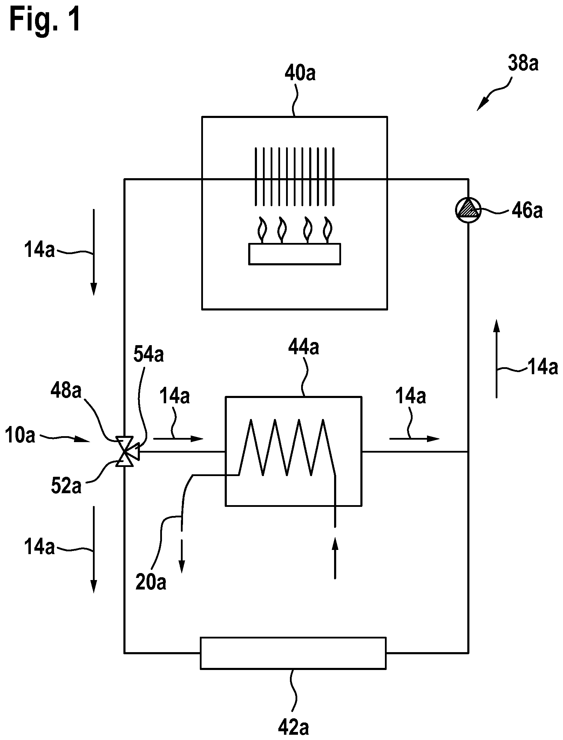

Figur 1 zeigt eine schematische Darstellung eines beispielhaften Heizungssystems 38a. Das Heizungssystem 38a weist eine Wärmeerzeugereinheit 40a auf. Die Wärmeerzeugereinheit 40a kann insbesondere als ein Heizkessel, beispielsweise als ein Gasheizkessel und/oder ein Ölheizkessel und/oder ein Pelletheizkessel, ausgebildet sein. Die Wärmeerzeugereinheit 40a ist insbesondere dazu vorgesehen, ein Heizmedium zu erwärmen. Ferner weist das Heizungssystem 38a einen Heizkörper 42a auf. Der Heizkörper 42a ist insbesondere dazu vorgesehen, eine von dem Heizmedium transportierte thermische Energie an eine Umgebung abzugeben. Des Weiteren weist das Heizungssystem 38a einen Wärmetauscher 44a auf. Der Wärmetauscher 44a ist insbesondere dazu vorgesehen, bei einer Anforderung von erwärmtem Trinkwasser und/oder Brauchwasser eine von dem Heizmedium transportierte thermische Energie an das Trinkwasser und/oder Brauchwasser abzugeben. Zudem weist das Heizungssystem 38a eine Umwälzpumpe 46a auf. Die Umwälzpumpe 46a ist dazu vorgesehen, eine Strömung des Heizmediums zu erzeugen.

Ferner weist das Heizungssystem 38a eine Ventilvorrichtung 10a auf. Die Ventilvorrichtung 10a ist als eine Dreiwegeventilvorrichtung ausgebildet. Die Ventilvorrichtung 10a ist dazu vorgesehen, bei einer Anforderung von erwärmtem Trinkwasser und/oder Brauchwasser das Heizfluid dem Wärmetauscher 44a zuzuleiten. Liegt keine Anforderung von erwärmtem Trinkwasser und/oder Brauchwasser vor, ist die Ventilvorrichtung 10a dazu vorgesehen, das Heizmedium dem Heizkörper 42a zuzuleiten.

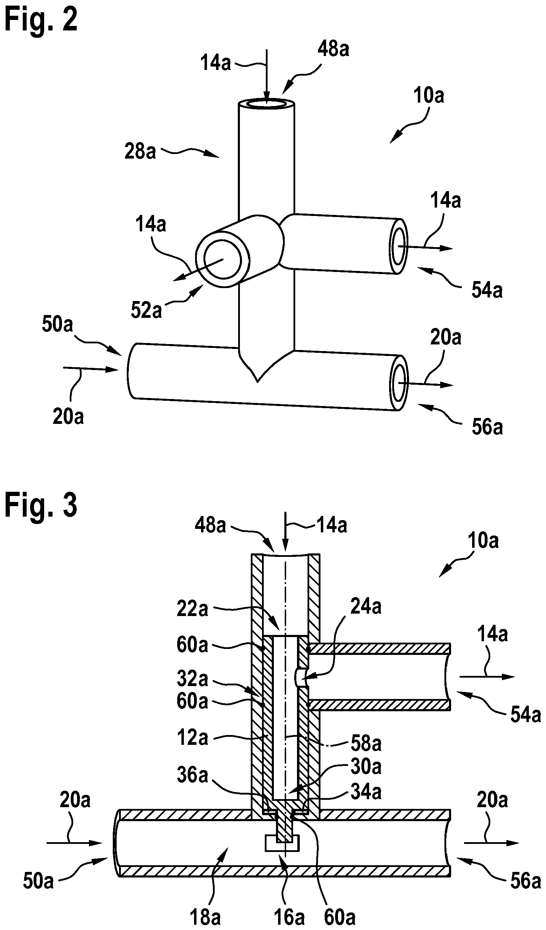

Figur 2 zeigt die Ventilvorrichtung 10a in einer perspektivischen Außenansicht. Die Ventilvorrichtung 10 umfasst ein Rohrsystem 28a. Das Rohrsystem 28a weist eine Fluideinlassöffnung 48a und zwei Fluidauslassöffnungen 52a, 54a für einen ersten Fluidstrom 14a auf. Der erste Fluidstrom 14a ist von dem Heizmedium gebildet. Eine erste Fluidauslassöffnung 52a für den ersten Fluidstrom 14a ist mit dem Heizkörper 42a verbunden. Eine zweite Fluidauslassöffnung 54a für den ersten Fluidstrom 14a ist mit dem Wärmetauscher 44a verbunden. Ferner weist das Rohrsystem 28a eine Fluideinlassöffnung 50a und eine Fluidauslassöffnung 56a für einen zweiten Fluidstrom 20a auf. Der zweite Fluidstrom 20a ist von zu erwärmendem Trinkwasser und/oder Brauchwasser gebildet.

Figur 3 zeigt eine Schnittdarstellung der Ventilvorrichtung 10a. Die Ventilvorrichtung 10a weist ein Ventilelement 12a auf, welches dazu vorgesehen ist, den ersten Fluidstrom 14a zu beeinflussen. Das Ventilelement 12a ist rohrförmig ausgebildet. Das Ventilelement 12a ist innerhalb des Rohrsystems 28a angeordnet. Das Rohrsystem 28a ist zur Aufnahme der Fluidströme 14a, 20a vorgesehen und stellt in einem unmontierten Zustand des Ventilelements 12a einen zusammenhängenden Fluidraum 30a bereit.

Ferner weist die Ventilvorrichtung 10a eine mit dem Ventilelement 12a wirkschlüssig verbundenen mechanischen Aktoreinheit 16a auf, welches dazu vorgesehen ist, eine Stellung des Ventilelements 12a zu verändern. Die Aktoreinheit 16a ist teilweise in einem Strömungsbereich 18a des zweiten Fluidstroms 20a angeordnet. Die Aktoreinheit 16a ist dazu vorgesehen, die Stellung des Ventilelements 12a in Abhängigkeit vom zweiten Fluidstrom 20a zu verändern. Das Ventilelement 12a ist dazu vorgesehen, den ersten Fluidstrom 14a in Abhängigkeit vom zweiten Fluidstrom 20a umzulenken. Das Ventilelement 12a weist eine Fluideinlassöffnung 22a und eine Fluidauslassöffnung 24a auf, welche senkrecht zueinander angeordnet sind. Die Aktoreinheit 16a und das Ventilelement 12a sind um eine gemeinsame Drehachse 58a drehbar angeordnet. Bei einer Anforderung von erwärmten Trinkwasser und/oder Brauchwasser wird die Aktoreinheit 16a durch den anströmenden zweiten Fluidstrom 20a in eine Drehbewegung versetzt. Die Drehbewegung der Aktoreinheit 16a bewirkt eine richtungsgleiche Drehbewegung des Ventilelements 12a, wodurch die Fluidauslassöffnung 24a des Ventilelements 12a zu der zweiten Fluidauslassöffnung 54a des Rohrsystems 28a ausgerichtet wird. Der erste Fluidstrom 14a wird bei dieser Stellung des Ventilelements 12a dem Wärmetauscher 44a zugeleitet. Die Ventilvorrichtung 10a weist ein Rückstellelement 34a auf, welches dazu vorgesehen ist, eine Rückstellkraft auf das Ventilelement 12a und/oder die Aktoreinheit 16a auszuüben. Liegt keine Anforderung von erwärmtem Trinkwasser und/oder Brauchwasser vor, wird die Aktoreinheit 16a nicht durch den zweiten Fluidstrom 20a angeströmt. Das Rückstellelement 34a versetzt die Aktoreinheit 16a und/oder das Ventilelement 12a in eine Drehbewegung, welche die Fluidauslassöffnung 24a des Ventilelements 12a zu der ersten Fluidauslassöffnung 52a des Rohrsystems 28a ausrichtet. Der erste Fluidstrom 14a wird bei dieser Stellung des Ventilelements 12a dem Heizkörper 42a zugeleitet. Eine Drehbewegung des Ventilelements 12a über eine jeweilige Endstellung hinaus wird durch hier nicht dargestellte Stopperelemente verhindert. Des Weiteren weist die Ventilvorrichtung 10a ein Untersetzungsgetriebe 36a auf, welches wirkschlüssig zwischen der Aktoreinheit 16a und dem Ventilelement 12a angeordnet ist.

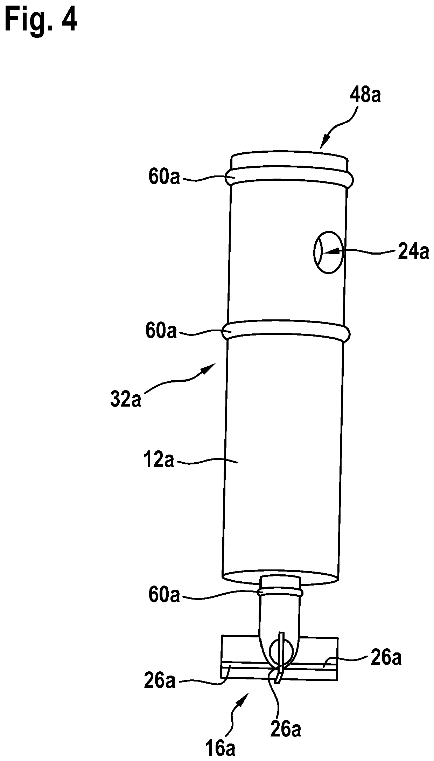

Figur 4 zeigt das Ventilelement 12a mit verbundener Aktoreinheit 16a in einer perspektivischen Darstellung. Die Aktoreinheit 16a weist vier sternförmig um die Drehachse 58a angeordnete Flügel 26a auf, welche dazu vorgesehen sind, einen Strömungswiderstand für den zweiten Fluidstrom 20a bereitzustellen. Ferner weist die Ventilvorrichtung 10a eine Dichtungseinheit 32a auf, welche dazu vorgesehen ist, die Fluidströme 14a, 20a in einem montierten Zustand des Ventilelements 12a voneinander zu trennen. Die Dichtungseinheit 32a umfasst eine Mehrzahl von ringförmigen Dichtelementen 60a auf, welche das Ventilelement 12a und/oder die Aktoreinheit 16a in Umfangsrichtung vollständig umschließen.

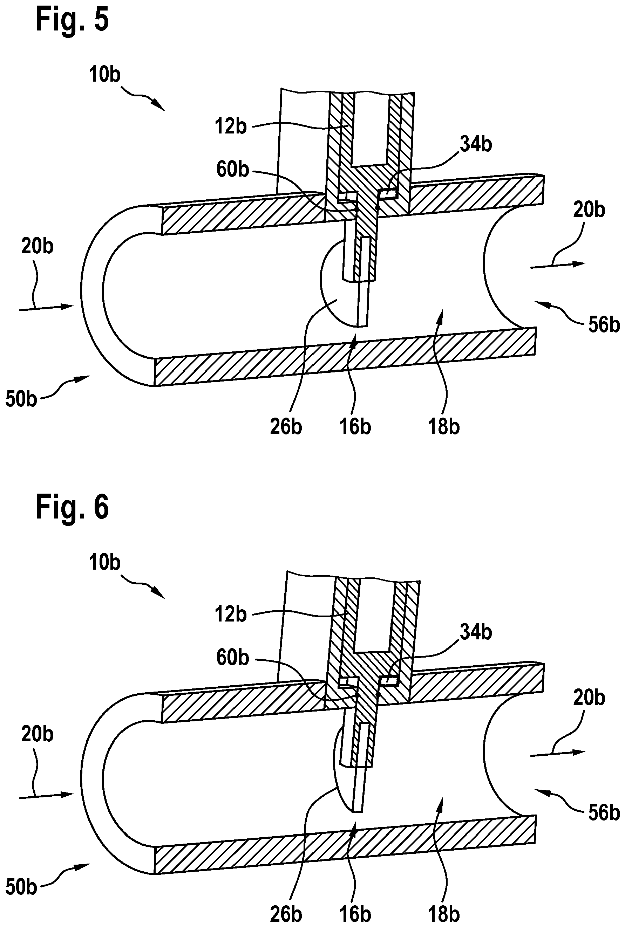

In den Figuren 5 und 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figuren 5 und 6 ist der Buchstabe a durch die Buchstaben b ersetzt.

Die Figuren 5 und 6 zeigen eine teilweise Schnittdarstellung einer alternativen Ventilvorrichtung 10b. Die Ventilvorrichtung 10b umfasst ein Ventilelement 12b und eine wirkschlüssig mit dem Ventilelement 12b verbundene Aktoreinheit 16b. Die Aktoreinheit 16b ist teilweise in einem Strömungsbereich 18b eines zweiten Fluidstroms 20b angeordnet und dazu vorgesehen, die Stellung des Ventilelements 12b in Abhängigkeit vom zweiten Fluidstrom 20b zu verändern. Die Aktoreinheit 16b und das Ventilelement 12b sind um eine gemeinsame Drehachse 58b drehbar angeordnet. Die Aktoreinheit 16b weist einen Flügel 26b auf, welcher dazu vorgesehen ist, einen Strömungswiderstand für den zweiten Fluidstrom 20b bereitzustellen. Der Flügel 26b ist hier beispielhaft halbkreisförmig ausgebildet.

Bei einer Anforderung von erwärmten Trinkwasser und/oder Brauchwasser wird die Aktoreinheit 16b durch den gegen den Flügel 26b der Aktoreinheit 16b strömenden zweiten Fluidstrom 20b in eine Drehbewegung versetzt. Die Drehbewegung der Aktoreinheit 16b bewirkt eine richtungsgleiche Drehbewegung des Ventilelements 12b, wodurch eine Fluidauslassöffnung 24b (hier nicht sichtbar) des Ventilelements 12b derart ausgerichtet wird, dass ein erster Fluidstrom 14b einem Wärmetauscher 44b eines Heizungssystems 38b zugeleitet wird. Die Ventilvorrichtung 10b weist ein Rückstellelement 34b auf, welches dazu vorgesehen ist, eine Rückstellkraft auf das Ventilelement 12b und/oder die Aktoreinheit 16b auszuüben. Liegt keine Anforderung von erwärmtem Trinkwasser und/oder Brauchwasser vor, wird die Aktoreinheit 16b nicht durch den zweiten Fluidstrom 20b angeströmt. Das Rückstellelement 34b versetzt die Aktoreinheit 16b und/oder das Ventilelement 12b in eine Drehbewegung, welche die Fluidauslassöffnung 24b des Ventilelements 12b derart ausrichtet, dass der erste Fluidstrom 14b einem Heizkörper 42b eines Heizungssystems 38b zugeleitet wird. Eine Drehbewegung des Ventilelements 12b über eine jeweilige Endstellung hinaus wird durch hier nicht dargestellte Stopperelemente verhindert.

## Patentansprüche

1. Ventilvorrichtung, insbesondere Dreiwegeventilvorrichtung, mit zumindest einem Ventilelement (12a; 12b), welches dazu vorgesehen ist, zumindest einen ersten Fluidstrom (14a; 14b) zu beeinflussen, und mit zumindest einer mit dem Ventilelement (12a; 12b) wirkschlüssig verbundenen mechanischen Aktoreinheit (16a; 16b), welche dazu vorgesehen ist, eine Stellung des Ventilelements (12a; 12b) zu verändern, wobei die Aktoreinheit (16a; 16b) in zumindest einem Betriebszustand zumindest teilweise in einem Strömungsbereich (18a; 18b) eines zweiten Fluidstroms (20a; 20b) angeordnet und dazu vorgesehen ist, die Stellung des Ventilelements (12a; 12b) in Abhängigkeit vom zweiten Fluidstrom (20a; 20b) zu verändern, **gekennzeichnet durch** zumindest ein Untersetzungsgetriebe (36a), welches wirkschlüssig zwischen der Aktoreinheit (16a; 16b) und dem Ventilelement (12a; 12b) angeordnet ist, so dass eine Drehbewegung der Aktoreinheit (16a; 16b) in eine Drehbewegung des Ventilelements (12a; 12b) gewandelt wird, welche gegenüber der Drehbewegung der Aktoreinheit (16a; 16b) eine reduzierte Drehgeschwindigkeit aufweist.

2. Ventilvorrichtung nach Anspruch 1, **dadurch gekennzeichnet, dass** das Ventilelement (12a; 12b) dazu vorgesehen ist, den ersten Fluidstrom (14a; 14b) umzulenken.

3. Ventilvorrichtung nach einem der vorhergehenden Ansprüche, **dadurch gekennzeichnet, dass** das Ventilelement (12a; 12b) zumindest im Wesentlichen rohrförmig ausgebildet ist.

4. Ventilvorrichtung nach einem der vorhergehenden Ansprüche, **dadurch gekennzeichnet, dass** das Ventilelement (12a; 12b) zumindest eine Fluideinlassöffnung (22a; 22b) und zumindest eine Fluidauslassöffnung (24a; 24b) aufweist, welche zumindest im Wesentlichen senkrecht zueinander angeordnet sind.

5. Ventilvorrichtung nach einem der vorhergehenden Ansprüche, **dadurch gekennzeichnet, dass** die Aktoreinheit (16a; 16b) und das Ventilelement (12a; 12b) um eine gemeinsame Drehachse (58a; 58b) drehbar angeordnet sind.

6. Ventilvorrichtung nach einem der vorhergehenden Ansprüche, **dadurch gekennzeichnet, dass** die Aktoreinheit (16a; 16b) zumindest einen Flügel (26a; 26b) aufweist, welcher dazu vorgesehen ist, einen Strömungswiderstand für den zweiten Fluidstrom (20a; 20b) bereitzustellen.

7. Ventilvorrichtung nach einem der vorhergehenden Ansprüche, **gekennzeichnet durch** ein Rohrsystem (28a; 28b), welches zur Aufnahme der Fluidströme (14a, 20a; 14b; 20b) vorgesehen ist und welches zumindest für sich allein genommen genau einen intern zusammenhängenden Fluidraum (30a; 30b) bereitstellt.

8. Ventilvorrichtung nach einem der vorhergehenden Ansprüche, **gekennzeichnet durch** eine Dichtungseinheit (32a; 32b), welche dazu vorgesehen ist, die Fluidströme (14a, 20a; 14b; 20b) in zumindest einem Betriebszustand zumindest im Wesentlichen voneinander zu trennen.

9. Ventilvorrichtung nach einem der vorhergehenden Ansprüche, **gekennzeichnet durch** zumindest ein Rückstellelement (34a; 34b), welches dazu vorgesehen ist, zumindest eine Rückstellkraft auf das Ventilelement (12a; 12b) und/oder die Aktoreinheit (16a; 16b) auszuüben.

10. Heizungssystem mit zumindest einer Ventilvorrichtung (10a; 10b) nach einem der vorhergehenden Ansprüche.

## Claims

1. Valve device, in particular three-way valve device, having at least one valve element (12a; 12b), which is provided to influence at least a first fluid stream (14a; 14b), and having at least one mechanical actuator unit (16a; 16b), which is operatively connected to the valve element (12a; 12b) and is provided to alter a position of the valve element (12a; 12b), wherein, in at least one operating state, the actuator unit (16a; 16b) is arranged at least to some extent in a flow region (18a; 18b) of a second fluid stream (20a; 20b) and is provided to alter the position of the valve element (12a; 12b) in dependence on the second fluid stream (20a; 20b), **characterized by** at least one reduction gear unit (36a), which is arranged for operation between the actuator unit (16a; 16b) and the valve element (12a; 12b), so that a rotary movement of the actuator unit (16a; 16b) is converted into a rotary movement of the valve element (12a; 12b), the latter rotary movement having a reduced rotational speed in relation to the rotary movement of the actuator unit (16a; 16b).

2. Valve device according to Claim 1, **characterized in that** the valve element (12a; 12b) is provided to deflect the first fluid stream (14a; 14b).

3. Valve device according to either of the preceding claims, **characterized in that** the valve element (12a; 12b) is of at least essentially tubular design.

4. Valve device according to one of the preceding claims, **characterized in that** the valve element (12a; 12b) has at least one fluid-inlet opening (22a; 22b) and at least one fluid-outlet opening (24a; 24b), the openings being arranged at least essentially perpendicularly to one another.

5. Valve device according to one of the preceding claims, **characterized in that** the actuator unit (16a; 16b) and the valve element (12a; 12b) are arranged such that they can be rotated about a common axis of rotation (58a; 58b).

6. Valve device according to one of the preceding claims, **characterized in that** the actuator unit (16a; 16b) has at least one wing (26a; 26b), which is provided to create a flow resistance with the second fluid stream (20a; 20b).

7. Valve device according to one of the preceding claims, **characterized by** a tube system (28a; 28b), which is provided to accommodate the fluid streams (14a, 20a; 14b; 20b) and, at least seen on its own, creates precisely one internally continuous fluid chamber (30a; 30b).

8. Valve device according to one of the preceding claims, **characterized by** a sealing unit (32a; 32b), which is provided so that, in at least one operating state, the fluid streams (14a, 20a; 14b; 20b) are at least essentially separated from one another.

9. Valve device according to one of the preceding claims, **characterized by** at least one restoring element (34a; 34b), which is provided to subject the valve element (12a; 12b) and/or the actuator unit (16a; 16b) to at least one restoring force.

10. Heating system having at least one valve device (10a; 10b) according to one of the preceding claims.

## Revendications

1. Dispositif formant vanne, en particulier dispositif formant vanne à trois voies, comprenant au moins un élément formant vanne (12a ; 12b) prévu pour agir sur au moins un premier écoulement de fluide (14a ; 14b) et au moins une unité d'actionnement mécanique (16a ; 16b) reliée fonctionnellement à l'élément formant vanne (12a ; 12b) et prévue pour modifier la position de l'élément formant vanne (12a ; 12b), l'unité d'actionnement (16a ; 16b) étant disposée, dans au moins un état de fonctionnement, au moins partiellement dans une région d'écoulement (18a ; 18b) d'un deuxième écoulement de fluide (20a ; 20b) et étant prévue pour modifier la position de l'élément formant vanne (12a ; 12b) en fonction du deuxième écoulement de fluide (20a ; 20b), **caractérisé par** au moins un réducteur (36a) qui est fonctionnellement disposé entre l'unité d'actionnement (16a ; 16b) et l'élément formant vanne (12a ; 12b) de sorte qu'un mouvement de rotation de l'unité d'actionnement (16a ; 16b) est converti en un mouvement de rotation de l'élément formant vanne (12a ; 12b) qui a une vitesse de rotation réduite par rapport au mouvement de rotation de l'unité d'actionnement (16a ; 16b).

2. Dispositif formant vanne selon la revendication 1, **caractérisé en ce que** l'élément formant vanne (12a ; 12b) est prévu pour rediriger le premier écoulement de fluide (14a ; 14b).

3. Dispositif formant vanne selon l'une des revendications précédentes, **caractérisé en ce que** l'élément formant vanne (12a ; 12b) est au moins sensiblement tubulaire.

4. Dispositif formant vanne selon l'une des revendications précédentes, **caractérisé en ce que** l'élément formant vanne (12a ; 12b) comporte au moins une ouverture d'entrée de fluide (22a ; 22b) et au moins une ouverture de sortie de fluide (24a ; 24b), lesquelles sont disposées au moins sensiblement perpendiculairement l'une à l'autre.

5. Dispositif formant vanne selon l'une des revendications précédentes, **caractérisé en ce que** l'unité d'actionnement (16a ; 16b) et l'élément formant vanne (12a ; 12b) sont disposés de manière rotative sur un axe de rotation commun (58a ; 58b).

6. Dispositif formant vanne selon l'une des revendications précédentes, **caractérisé en ce que** l'unité d'actionnement (16a ; 16b) comporte au moins une ailette (26a ; 26b) qui est prévue pour opposer une résistance au deuxième écoulement de fluide (20a ; 20b).

7. Dispositif formant soupape selon l'une des revendications précédentes, **caractérisé par** un système de canalisation (28a ; 28b) qui est prévu pour recevoir les écoulements de fluide (14a, 20a ; 14b, 20b) et qui fournit au moins à lui seul exactement un espace de fluide (30a ; 30b) intérieurement adjacent.

8. Dispositif formant vanne selon l'une des revendications précédentes, **caractérisé par** une unité d'étanchéité (32a ; 32b) qui est prévue pour séparer les écoulements de fluide (14a, 20a ; 14b ; 20b) au moins sensiblement les uns des autres dans au moins un état de fonctionnement.

9. Dispositif formant vanne selon l'une des revendications précédentes, **caractérisé par** au moins un élément de rappel (34a ; 34b) qui est prévu pour exercer au moins une force de rappel sur l'élément formant vanne (12a ; 12b) et/ou l'unité d'actionnement (16a ; 16b).

10. Système de chauffage comprenant au moins un dispositif formant vanne (10a ; 10b) selon l'une des revendications précédentes.
